(19) **Europäisches Patentamt / European Patent Office / Office européen des brevets**

(11) **EP 2 376 543 B1**

(12) **FASCICULE DE BREVET EUROPEEN**

(45) Date de publication et mention de la délivrance du brevet:
**17.09.2014 Bulletin 2014/38**

(21) Numéro de dépôt: **09764536.0**

(22) Date de dépôt: **07.12.2009**

(51) Int Cl.:
**C08F 36/04** *(2006.01)*　　**C08F 36/06** *(2006.01)*
**C08F 4/54** *(2006.01)*

(86) Numéro de dépôt international:
**PCT/EP2009/066542**

(87) Numéro de publication internationale:
**WO 2010/069805 (24.06.2010 Gazette 2010/25)**

(54) **PROCEDE DE PREPARATION D'UN ELASTOMERE DIENIQUE FONCTIONNALISE, TEL QU'UN POLYBUTADIENE**

VERFAHREN ZUR HERSTELLUNG EINES FUNKTIONALISIERTEN DIENELASTOMERS, WIE EINES POLYBUTADIENS

PROCESS FOR PREPARING A FUNCTIONALIZED DIENE ELASTOMER, SUCH AS A POLYBUTADIENE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.12.2008 FR 0858581**

(43) Date de publication de la demande:
**19.10.2011 Bulletin 2011/42**

(73) Titulaires:
- **COMPAGNIE GENERALE DES ETABLISSEMENTS MICHELIN**
  **63000 Clermont-Ferrand (FR)**
- **MICHELIN Recherche et Technique S.A.**
  **1763 Granges-Paccot (CH)**

(72) Inventeurs:
- **ROBERT, Pierre**
  **F-63040 Clermont-Ferrand Cedex 9 (FR)**
- **THUILLIEZ, Julien**
  **F-63100 Clermont-Ferrand (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A1- 1 845 118　　WO-A1-00/18812**

**Description**

La présente invention concerne un procédé de préparation d'un élastomère diénique fonctionnalisé, tel qu'un homopolymère ou un copolymère du butadiène. L'invention s'applique notamment à l'obtention d'un polybutadiène fonctionnalisé à taux élevé d'enchaînements *cis*-1,4 présentant à la fois une viscosité Mooney égale ou supérieure à 40 et un indice de polydispersité réduit.

Pour la préparation d'homopolymères ou de copolymères du butadiène présentant un taux élevé d'enchaînements *cis*-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Les documents de brevet WO-A-02/38636 et WO-A-03/097708 au nom des Demanderesses enseignent, pour l'obtention de polybutadiènes, d'utiliser un système catalytique de type « préformé » à base d'au moins :

- un diène conjugué de préformation, tel que le butadiène,
- un sel d'un ou de plusieurs métaux de terre rare d'un acide phosphorique organique, qui est en suspension dans au moins un solvant hydrocarboné inerte, saturé et de type aliphatique ou alicyclique,
- un agent d'alkylation constitué d'un alkylaluminium de formule $AlR_3$ ou $HAlR_2$, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,1 et une viscosité Mooney ML(1+4) à 100° C égale ou supérieure à 40. Ces caractéristiques combinées rendent ces polybutadiènes bien adaptés pour être utilisés dans des bandes de roulement d'enveloppe de pneumatique.

Le document de brevet EP-A1-919573 de la société ENICHEM enseigne, pour l'obtention d'un homopolymère ou d'un copolymère du butadiène, d'initier la réaction de polymérisation avec un système catalytique comprenant :

a) un composé lanthanide de formule $LnX_3$ où X est choisi parmi les halogénures, alcoolates, carboxylates, $-N(R_x)$ $(R_y)$, où $R_x$ et $R_y$ sont des radicaux alcoyles C1 - C5, et Ln est préférentiellement le néodyme, et soit :

i) un composé de formule Li(A),
ii) un composé de formule $LiLn(A)_4$,
dans lesquels A est un radical allylique de formule : $R_1R_2C-CR_3-CR_4R_5$ et $R_1,R_2,R_3,R_4,R_5$ sont choisis parmi H ou un radical $C_1 - C_{10}$,

b) un co-catalyseur constitué, entre autres, d'un alkylaluminium de formule $AlX_sR_{3-s}$ dans laquelle s est zéro ou un nombre entier égal à 1 ou 2,
ces constituants pouvant être mis à réagir dans un solvant hydrocarboné séparément ou entre eux, en présence ou non du monomère à polymériser, dans le réacteur de polymérisation ou en-dehors de celui-ci, les composés lanthanides étant préférentiellement utilisés en solution dans des solvants tels que du THF et des éthers aliphatiques seuls ou en mélange avec des solvants hydrocarbonés.

Les polybutadiènes obtenus au moyen de ce système catalytique présentent un taux d'enchaînements cis-1,4 supérieur à 95 et, soit un indice de polydispersité élevé égal à 2,7 et une Mw égale à 268 000g/mol, ce qui rend ces polybutadiènes pas bien adaptés pour être utilisés dans des bandes de roulement d'enveloppe du pneumatique présentant un faible niveau d'hystérèse, ou soit un indice de polydispersité compris entre 1,7 et 1,8 et une Mw très élevée comprise entre 463 000 g/mol et 922 000 g/mol, ce qui rend problématique leur mise en oeuvre et leur mélangeage. Par ailleurs, Enichem illustre son invention essentiellement par des systèmes catalytiques à base de MAO, constituant coûteux.

Le document de brevet EP-A1-1.845.118 au nom des Demanderesses enseigne, pour l'obtention d'un élastomère diénique présentant un taux d'enchaînements cis-1,4 supérieur à 90 % et un indice de polydispersité égal ou inférieur à 2,1, tel qu'un homopolymère ou un copolymère du butadiène d'utiliser un système catalytique avec au moins un monomère diène conjugué à polymériser, caractérisé en ce que ledit système catalytique est à base d'au moins :

- optionnellement un diène conjugué de préformation,

- un sel d'un ou plusieurs métaux de terre(s) rare(s), tel qu'un sel d'un acide carboxylique ou d'un acide phosphorique organique,
- un solvant hydrocarboné inerte,
- un agent d'alkylation comprenant un dérivé allylique de l'aluminium de formule $R''_nAlR'_{3-n}$, où R' est un groupe alcoyle saturé ou non ou bien un hydrure, où R'' est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

Bien que les élastomères diéniques obtenus selon le procédé divulgué dans le document de brevet EP-A1-1.845.118 soient bien adaptés pour la fabrication de bandes de roulement d'enveloppes de pneumatiques, depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement toujours plus réduite. Pour atteindre un tel objectif, il a été proposé de modifier la structure des polymères et des copolymères diéniques en fin de polymérisation au moyen d'agents de fonctionnalisation, d'agents de couplage ou d'agents d'étoilage.

La très grande majorité de ces solutions s'est d'abord concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à l'interaction avec du noir de carbone, on peut par exemple citer la fonctionnalisation d'élastomères diéniques par la 4,4'-bis (diéthylamino)benzophénone (« DEAB » en abrégé), la N-méthyl pyrolidone ou des dérivés halogénés de l'étain de formule $R_{4-x}SnCl_x$, où R est un groupe alcoyle et x varie de 1 à 4.

On s'est également intéressé à l'utilisation de polymères fonctionnalisés actifs vis-à-vis de la silice, dans le but d'obtenir une bonne interaction de ces polymères avec la silice.

A titre d'exemples, on peut citer la fonctionnalisation par le glycidyloxypropyltriméthoxysilane (GLYMO en abrégé ci-après), le glycidyloxypropylméthyldiéthoxysilane, le glycidyloxypropyldiméthméthoxysilane, l'isocyanatopropyltriéthoxysilane, ou par des agents tels que ceux décrits dans le document de brevet FR-A-2 740 778, qui divulgue l'incorporation à des compositions de caoutchouc comprenant à titre de charge renforçante de la silice à titre majoritaire, de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On a pu établir que ces polymères confèrent des propriétés de caoutchouterie, notamment hystérétiques et de renforcement à l'état réticulé, qui sont améliorées par rapport à celles de compositions témoin à base de polymères diéniques non fonctionnels, et qui sont au moins analogues à celles de compositions à base de polymères diéniques à fonction alcoxysilane.

Parmi les autres réactions de fonctionnalisation étudiées, on peut notamment citer, à titre non limitatif, la fonctionnalisation le long de la chaîne d'élastomères diéniques par des fonctions COOH. Cette fonctionnalisation peut être avantageusement mise en oeuvre par le procédé décrit dans le document EP-B-1 050 545 au nom des Demanderesses, qui consiste essentiellement :

- dans une première étape, à soumettre dans un solvant hydrocarboné inerte un élastomère à une réaction d'hydroalumination ou de carboalumination le long de sa chaîne par addition d'un agent dérivé de l'aluminium (tel qu'un alkyl aluminium ou un aluminate) à cet élastomère,
- dans une seconde étape, à ajouter au produit de cette réaction au moins un agent électrophile prévu pour réagir avec ledit agent dérivé de l'aluminium, tel qu'un anhydride cyclique ou non (e.g. l'anhydride succinique ou le dioxyde de carbone), puis
- dans une troisième étape, à stopper ultérieurement la réaction de fonctionnalisation de la seconde étape et à récupérer le polymère fonctionnalisé le long de sa chaîne.

Les travaux des Demanderesses ont permis de trouver de manière surprenante que la sélection d'une température de polymérisation relativement basse c'est-à-dire égale ou inférieure à 30°C, préférentiellement inclusivement comprise entre 0°C et 25°C, combinée à un système catalytique spécifique permet d'obtenir un compromis optimum entre une activité catalytique et un taux de fonctionnalisation qui sont relativement élevés pour ledit élastomère, ce taux de fonctionnalisation étant favorisé par le fait de cette température réduite de polymérisation.

Les travaux des Demanderesses ont en outre permis de trouver que la sélection d'une température de polymérisation relativement basse, c'est-à-dire s'étendant inclusivement de 10°C à 40°C, combinée à un système catalytique spécifique permet d'inhiber de manière satisfaisante la réaction de couplage en cours de polymérisation dudit dérivé allylique de l'aluminium et de diminuer la quantité de produit de couplage formé au cours de la polymérisation..

Le système catalytique spécifique est à base d'au moins :

- optionnellement un diène conjugué de préformation,
- un sel d'un ou plusieurs métaux de terre rare, tel qu'un sel d'un acide carboxylique ou d'un acide phosphorique organique,
- un solvant hydrocarboné inerte,
- un agent d'alkylation spécifique composé du produit de réaction d'un dérivé allylique de lithium avec un dérivé halogénure de dialkylaluminium, le dérivé allylique de l'aluminium alors obtenu répondant à la formule $R''_n AlR'_{3-n}$, où R' est un groupe alcoyle saturé ou non ou bien un hydrure, où R" est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.:

  (i) soit lors de sa synthèse (i.e. antérieurement à la réaction des constituants avec le monomère à polymériser),
  (ii) soit au milieu de polymérisation comprenant ledit système catalytique et le(s)dit(s) monomère(s) à polymériser (i.e. lors de la réaction), puis qu'on ajoute un agent de fonctionnalisation au polymère issu de la réaction,

on obtient des élastomères diéniques fonctionnalisés à fort taux d'enchaînements *cis*-1,4, tels que des homo- ou copolymères du butadiène, qui présentent notamment une viscosité Mooney ML(1+4) à 100° C prédéterminée égale ou supérieure à 40 et un indice de polydispersité Ip inférieur à 2,5 ayant de bonnes propriétés mécaniques et des propriétés d'hystérèse améliorée.

La température de polymérisation est inclusivement comprise de 10° C à 40° C et, préférentiellement, est inclusivement comprise de 10° C à 20° C.

A titre de sel de terre rare utilisable dans ce système catalytique mis en oeuvre dans le procédé conforme à l'invention, on peut avantageusement utiliser :

- dans un premier cas : un sel de terre(s) rare(s) d'un acide carboxylique, tel qu'un carboxylate de néodyme et par exemple le tris(2-éthyl hexanoate) de néodyme, le naphténate de néodyme ou le versatate de néodyme, ou bien
- dans un second cas : un sel de terre(s) rare(s) d'un acide phosphorique, tel que le tris(di-2-éthylhexyl-phosphate) de néodyme.

Ce sel de terre(s) rare(s) d'un acide phosphorique peut être utilisé sous forme d'une solution plus ou moins visqueuse et qui peut comporter ou non de l'acide libre ou de l'eau résiduelle en fonction des conditions de préparation par ailleurs connues en soi.

Le sel de terre(s) rare(s) peut être préparé soit en continu, soit en discontinu comme décrit dans le document de brevet WO-A-02/38636. Lorsque le sel d'un ou plusieurs métaux de terre(s) rare(s) se présente sous la forme d'une poudre non hygroscopique, le temps de solubilisation dans le solvant est variable en fonction des conditions de solubilisation utilisées.

Ainsi, selon un premier mode de réalisation, le sel de terre(s) rare(s) se présentant sous forme d'une poudre non hygroscopique ayant une légère tendance à s'agglomérer à la température ambiante est mis en solution dans un solvant hydrocarboné, inerte, aliphatique ou alicyclique de bas poids moléculaire, tel que le cyclohexane, le méthylcyclohexane, l'hexane pur ou sous forme de coupe de solvants aliphatique et alicyclique de point d'ébullition allant de 65°C à 72°C, le n-heptane, ou un mélange de ces solvants. A titre préférentiel, on utilise le méthylcyclohexane à titre de solvant hydrocarboné inerte.

Selon un autre mode de réalisation préférentiel, comme par exemple décrit dans le document de brevet WO-A-00/64 910, le sel de terre(s) rare(s) mis à réagir est synthétisé « in situ » directement dans le solvant, c'est-à-dire que la réaction du dérivé de l'acide phosphorique avec le composé de métal de terre(s) rare(s) est réalisée en présence dudit solvant pour former le sel de terre(s) rare(s) dans ledit solvant, ledit sel se présentant sous forme d'une solution plus ou moins visqueuse qui contient le composé de la formule $Nd(P)_3 . x\, PH$, dans laquelle x est un nombre, entier ou non, égal ou supérieur à 0, et PH représente un acide libre qui est un diester de l'acide phosphorique de formule $[(RO)_2 (HO)P = 0]$ résultant de la synthèse « in situ ».

Selon un autre mode de réalisation, la solution de métal de terre(s) rare(s) préparée selon le premier mode de réalisation peut contenir de l'acide libre de formule $(RO)_2(HO)P = 0$ qui est ajouté pendant ou postérieurement à la solubilisation du sel à l'état de poudre.

4

A titre de sels dudit ou desdits métaux de terre(s) rare(s) utilisables dans le procédé conforme à l'invention, on peut citer à titre préférentiel des organophosphates du néodyme, du cérium, du didyme et préférentiellement le tris [ditbutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme. On peut également utiliser, à titre de sel, un mélange de plusieurs sels d'un acide phosphorique organique d'un métal de terre(s) rare(s).

Selon un exemple préférentiel commun à ces modes de réalisation, on utilise à titre de sel un tris[bis(2-éthylhexyl)phosphate] dudit ou desdits métaux de terre(s) rare(s). A titre encore plus préférentiel, ledit sel de terre(s) rare(s) est le tris[bis(2-éthylhexyl)phosphate] de néodyme ($Nd(P)_3$ en abrégé ci-après).

A titre de solvant hydrocarboné inerte utilisable dans le système catalytique mis en oeuvre dans le procédé conforme à l'invention, on peut par exemple utiliser un solvant aromatique, tel que le toluène, ou bien un solvant aliphatique ou alicyclique, tel que le n-heptane, le cyclohexane ou le méthylcyclohexane.

A titre de dérivé allylique de l'aluminium, qui est utilisé spécifiquement comme agent d'alkylation dans le système catalytique mis en oeuvre dans le procédé conforme à l'invention, on utilise avantageusement un dérivé dont le radical allylique est choisi dans le groupe constitué par les dérivés butadiényle, isoprényle, oligobutadiényle et oligoisoprényle, le nombre d'unités de ces oligomères étant par exemple compris entre 1 et 10, et préférentiellement 5.

Le dérivé allylique de l'aluminium comprend de préférence le produit de la réaction d'un dérivé allylique du lithium de formule R"Li, tel qu'un (oligo)butadiényle lithium ou un (oligo)isoprényle lithium qui est le précurseur du dérivé allylique de l'aluminium, et d'un agent halogénant de formule $X_nAlR'_{3-n}$, où X est un halogène et où R', R" et n sont tels que définis ci-dessus.

Ledit dérivé allylique du lithium de formule R"Li est le produit de la réaction d'un diène conjugué, tel que le 1,3-butadiène ou l'isoprène, et d'un alkyllithium, tel que du sec-butyl lithium, dans un solvant aromatique, aliphatique ou cycloaliphatique, tel que du cyclohexane ou du méthylcyclohexane. Ledit dérivé allylique de lithium pourrait également être obtenu par toute autre méthode de synthèse connue de l'homme du métier pour l'obtention d'un alkyllithium. On notera que ledit dérivé allylique de lithium R"Li doit être utilisé le plus pur possible, c'est-à-dire, exempt de toute trace d'alkyllithium résiduel, tel que du sec-butyl lithium.

Selon une première forme d'exécution, le dérivé allylique du lithium et l'agent halogénant sont mis à réagir en quantités stoechiométriques.

Selon une autre forme d'exécution préférentielle, ledit donneur d'halogène correspond audit agent halogénant de formule $X_nAlR'_{3-n}$ utilisé en excès, lequel a réagi en partie seulement avec ledit dérivé allylique du lithium pour l'obtention dudit dérivé allylique de l'aluminium.

Plus précisément, on fait réagir dans ce cas $h+x/n$ moles dudit agent halogénant $X_nAlR'_{3-n}$ pour $nh$ moles dudit dérivé allylique du lithium R"Li, avec $h \geq 1$, $1 \leq n \leq 3$ et $1 \leq x \leq 4$, de telle manière que cet agent halogénant exerce les deux fonctions suivantes :

- une première partie ($h$ moles par rapport au sel de terre rare) réagit avec le dérivé allylique du lithium R"Li pour générer le dérivé allylique de l'aluminium $R"_nAlR'_{3-n}$ selon la réaction n R"Li + $X_nAlR'_{3-n} \rightarrow R"_nAlR'_{3-n}$ + nLiX , et
- une seconde partie ($x/n$ moles par rapport au sel de terre rare) forme ledit donneur d'halogène pour l'halogénation de ce sel.

Avantageusement, on fait réagir $h+3$ moles dudit agent halogénant pour $h$ moles dudit dérivé allylique du lithium et pour 1 mole dudit sel de terre(s) rare(s), i.e. x = 3 et n = 1.

On notera toutefois que le dérivé allylique de l'aluminium du système catalytique selon l'invention pourrait être obtenu par toute autre méthode de synthèse connue de l'homme du métier pour l'obtention d'un alkyl aluminium.

Selon un premier mode préférentiel de réalisation du procédé conforme à l'invention dans lequel le système catalytique est spécifiquement préformé antérieurement à ladite réaction de polymérisation, c'est-à-dire par mise en contact des différents constituants catalytiques à une température éventuellement supérieure à la température ambiante suivie d'un vieillissement des constituants catalytiques avant la polymérisation, optionnellement en présence dudit diène conjugué de préformation, ledit agent halogénant utilisé pour l'obtention dudit dérivé allylique de l'aluminium est spécifiquement à base de chlore ou de brome, cet agent halogénant étant alors avantageusement un monohalogénure d'alkylaluminium, tel que le bromure de diéthylaluminium ou le chlorure de diéthylaluminium.

Selon un second mode de réalisation du procédé conforme à l'invention relative audit premier mode de réalisation, on prépare avantageusement ledit système catalytique en réalisant un pré-mélange comprenant ledit solvant hydrocarboné inerte, ledit dérivé allylique du lithium et ledit agent halogénant, puis un ajout dudit sel de terre rare à ce pré-mélange.

Selon un troisième mode de réalisation du procédé conforme à l'invention dans lequel le système catalytique est spécifiquement formé *in situ*, c'est-à-dire où tous les constituants catalytiques, c'est-à-dire le solvant, le monomère, le sel de terre rare le dérivé allylique du lithium, l'agent halogénant, sont introduits dans le réacteur juste avant polymérisation comprenant ledit monomère, ledit agent halogénant est à base de chlore ou de brome, étant alors avantageusement un monochlorure d'alkylaluminium, tel qu'un halogénure de diéthylaluminium et préférentiellement le chlorure de diéthylaluminium.

Conformément à l'un ou l'autre de ces trois modes de réalisation du procédé conforme à l'invention, le système catalytique est de préférence obtenu en mélangeant directement ledit solvant, ledit dérivé allylique du lithium, ledit agent halogénant présent en excès pour l'obtention dudit agent d'alkylation ainsi que ledit donneur d'halogène et ledit sel.

Concernant le donneur d'halogène selon l'invention, on notera que l'exclusion des sesquihalogénures d'alkylaluminium est une condition nécessaire pour l'obtention de polybutadiènes présentant à la fois une viscosité Mooney ML(1+4) à 100° C égale ou supérieure à 40 et un indice de polydispersité Ip inférieur à 2,1.

Selon le procédé conforme à l'invention, on notera que le rapport molaire (donneur d'halogène / sel de terre rare) peut présenter une valeur allant de 2 à 3,5 et, de préférence, allant de 2,6 à 3.

Selon un mode de réalisation avantageux du procédé conforme à l'invention, le rapport molaire (agent d'alkylation / sel de terre(s) rare(s)) dans ledit système catalytique présente une valeur réduite allant de 1 à 20.

Lorsque ledit rapport est inférieur ou égal à 5, l'activité catalytique est très élevée lorsque le sel de terre(s) rare(s) est un phosphate, la distribution des masses moléculaires est étroite et l'indice Ip inférieur ou égal à 2,1, tandis que lorsque ce rapport est relativement élevé, c'est-à-dire allant de 15 à 20, la distribution des masses moléculaires est très large et l'indice Ip égal ou supérieur à 2,5.

Selon une autre forme d'exécution du procédé conforme à l'invention, on peut introduire, en décalé par rapport au système catalytique utilisé pour la réaction de polymérisation, en continu ou en discontinu, du ou des monomère(s) à polymériser, une quantité supplémentaire prédéterminée d'au moins un composé alkylaluminium de formules $AlR_3$ ou $HAlR_2$ ou $R''_nAlR'_{3-n}$, dans lesquelles R et R' représentent un groupe alkyle saturé ou non, préférentiellement de un à douze atomes de carbone, R'' représente un groupe allylique, n un entier inclusivement de 1 à 3 et H représente un atome d'hydrogène dans le réacteur de polymérisation lorsqu'on opère en discontinu ou dans l'unité industrielle de polymérisation lorsqu'elle fonctionne en continu, c'est-à-dire pas en même temps et, par conséquent, soit avant, soit après, soit en partie avant et en partie après, par rapport à l'introduction du système catalytique avantageusement préformé utilisé pour la réaction de polymérisation.

On peut citer à titre d'alkylaluminiums de formule $AlR_3$ des composés tels que des trialkylaluminiums, par exemple le triisobutylaluminium, à titre d'alkylaluminium de formule $HAlR_2$, avantageusement l'hydrure de diisobutylaluminium ou un composé d'aluminium qui, avantageusement, est identique à celui utilisé comme agent d'alkylation du système catalytique.

La quantité d'au moins un composé d'alkylaluminium de formules $AlR_3$ ou $HAlR_2$ ou $R''_nAlR'_{3-n}$, où R, R', R'' et n sont tels que définis ci-dessus, qui est identique ou non à celui de l'agent d'alkylation dudit système catalytique, ajoutée est variable car fonction de l'un ou plusieurs ou tous les paramètres réactionnels énumérés à titre non limitatif ci-après, notamment du ou des monomère(s) diénique(s) à polymériser ou copolymériser, des conditions de polymérisation, des caractéristiques macrostructurales et/ou microstructurales visées de l'élastomère diénique à obtenir, du niveau fluctuant d'impuretés présentes, en cas de polymérisation en continu, dans l'unité industrielle de polymérisation, notamment dans le solvant de polymérisation, du temps de séjour dans le réacteur de polymérisation.

L'homme du métier ajustera dans une unité industrielle de polymérisation opérant en continu, comme connu en soi, la quantité de composé alkylaluminium à ajouter en décalé par rapport au système catalytique en fonction du ou des paramètre(s) pris en considération.

Selon une forme d'exécution préférentielle de l'invention, l'introduction en décalé dudit composé alkylaluminium est réalisée par l'introduction de la totalité dudit composé alkylaluminium avant l'introduction du système catalytique et, par voie de conséquence, avant la polymérisation du monomère ou des monomères à polymériser ou copolymériser.

Avantageusement, le rapport molaire (composé alkylaluminium ajouté en décalé et avantageusement avant réaction / alkylaluminium dans le système catalytique) varie de 1 : 20 à 10 : 1 et selon une forme d'exécution avantageuse varie de 0,05 à 3 et plus préférentiellement de 0,05 à 1.

On notera en outre que cette utilisation pour le rapport molaire (agent d'alkylation / sel de terre(s) rare(s)) d'une valeur réduite allant de 1 à 10, plus avantageusement de 1 à 5, conjointement à l'ajout préalable dudit composé alkylaluminium, se traduit avantageusement par une quantité totale moindre d'organo-aluminium(s), utilisés à la fois dans ledit système catalytique et avant polymérisation, ce qui implique une réduction significative du coût de mise en oeuvre du procédé selon l'invention en comparaison d'un procédé qui utiliserait un système catalytique analogue mais dont le rapport molaire (agent d'alkylation / sel de terre(s) rare(s)) serait plus élevé et qui n'inclurait pas cet ajout préalable du composé organoaluminium.

La quantité dudit composé alkylaluminium mis en présence avec le(s)dit(s) monomère(s) à polymériser varie de 10 à 5000 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

On notera que la mise en présence en décalé et avantageusement avant polymérisation du ou des monomères à polymériser avec ledit composé alkylaluminium permet de moduler avec une bonne flexibilité et à moindre coût l'activité du système catalytique en fonction de la nature du ou des monomères choisis et des caractéristiques de macrostructure de l'élastomère diénique obtenu, telles que sa viscosité Mooney. Il est ainsi possible de faire varier, sur une unité dédiée à la polymérisation de monomères de réactivités respectives différentes et/ou dédiée à l'obtention d'élastomères présentant une large plage de viscosités Mooney ML (1+4) à 100 °C, une distribution étroite de masse moléculaire, c'est-à-dire comprise entre 25 et 100, et présentant des propriétés de fluage à froid tout à fait satisfaisantes pour une utilisation dans des bandes de roulement de pneumatiques, l'activité du système catalytique utilisé et donc le rendement de polymérisation, tout en utilisant une seule et même formule de système catalytique.

On notera également que cet ajout dudit composé alkylaluminium en décalé et avantageusement avant polymérisation permet de régler l'activité du système catalytique en fonction des conditions de polymérisation, telles que la température et/ou le temps de séjour dans le ou chaque réacteur de polymérisation, ce qui peut notamment constituer un gain de productivité en cas de réduction du temps de séjour pour l'obtention d'un élastomère de caractéristiques données.

La réaction de polymérisation peut être mise en oeuvre dans un solvant de polymérisation hydrocarboné inerte, tel que du cyclohexane ou du méthylcyclohexane, ou bien en masse.

Selon une forme d'exécution du procédé de l'invention, le système catalytique peut être préparé en continu selon le procédé décrit dans le document de brevet WO-A-2007/045417 et la réaction de polymérisation peut être mise en oeuvre en continu ou en discontinu, dans un solvant de polymérisation hydrocarboné inerte, tel que du cyclohexane ou du méthylcyclohexane, ou bien en masse, et à une température allant de préférence de 0 à 100° C.

Avantageusement, lorsqu'on met en oeuvre la réaction de polymérisation en continu dans l'installation décrite dans le document de brevet WO-A-2007/045417, ledit composé alkylaluminium est introduit en une entrée de ligne située en amont d'au moins un réacteur de polymérisation, puis le sel de terre(s) rare(s) en amont d'au moins un réacteur de polymérisation dans lesquels est (sont) introduit(s) le(s) monomère(s) à polymériser et la base de Lewis est introduite (à préciser) ce qui permet avantageusement de coupler la synthèse en continu dudit système catalytique à une polymérisation d'au moins un diène conjugué également mise en oeuvre en continu dans un réacteur de polymérisation disposé à l'extrémité de la ligne.

On notera que l'introduction en décalé du composé alkylaluminium peut également être effectué après celle du système catalytique préformé, notamment sur une entrée de ligne du catalyseur, d'une unité de polymérisation opérant en continu, mais avant polymérisation du ou des monomère(s) à polymériser.

Selon une forme d'exécution avantageuse, le précurseur allylique du lithium et l'excès d'agent halogénant sont introduits en entrée de ligne à l'aide d'un mélangeur dynamique de type parfaitement agité, suivi d'une introduction du sel de terre(s) rare(s) à l'aide d'un mélangeur disposant d'une agitation de type statique.

On notera que dans ce cas, et cela d'autant plus que le rapport molaire (agent d'alkylation / sel de terre(s) rare(s)) est plus réduit, l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu.

Avantageusement, on met en oeuvre la réaction de polymérisation en continu, ledit composé alkylaluminium étant introduit en une entrée de ligne située en amont d'au moins un réacteur de polymérisation, puis le sel de terre(s) rare(s) en amont d'au moins un réacteur de polymérisation dans lesquels est (sont) introduit(s) le(s) monomère(s) à polymériser.

On notera que l'introduction en décalé du composé alkylaluminium peut également être effectuée après celle du système catalytique préformé, notamment sur une entrée de ligne du catalyseur, d'une unité de polymérisation opérant en continu, mais avant polymérisation du ou des monomère(s) à polymériser.

Selon une forme d'exécution avantageuse, le précurseur allylique du lithium et l'excès d'agent halogénant sont introduits en entrée de ligne à l'aide d'un mélangeur dynamique de type parfaitement agité, suivi d'une introduction du sel de terre(s) rare(s) à l'aide d'un mélangeur disposant d'une agitation de type statique.

On notera que dans ce cas, et cela d'autant plus que le rapport molaire (agent d'alkylation / sel de terre(s) rare(s)) est plus réduit, l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu.

On notera que l'ajout selon l'invention dudit composé alkylaluminium permet également d'obtenir, même en présence de telles impuretés, la reproduction mentionnée ci-dessus du résultat procuré par un système catalytique analogue, mais dont le rapport molaire (agent d'alkylation / sel de terre(s) rare(s)) serait plus élevé.

A titre d'agent de fonctionnalisation utilisable dans le procédé selon l'invention pour l'obtention dudit élastomère fonctionnalisé, on peut utiliser de manière connue en soi tout agent électrophile approprié pour améliorer l'interaction dudit élastomère avec une charge renforçante de type noir de carbone ou de type charge inorganique renforçante, telle que de la silice.

A titre d'élastomère diénique fonctionnalisé pouvant être préparé par le procédé selon l'invention, on peut citer tout homopolymère ou copolymère obtenu par homopolymérisation ou copolymérisation d'au moins un monomère diène conjugué ayant de 4 à 12 atomes de carbone, éventuellement avec un composé vinylaromatique puis réaction avec un agent de fonctionnalisation.

A titre de monomère(s) diène(s) conjugué(s) conviennent notamment le butadiène-1,3, l'isoprène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères fonctionnalisés peuvent contenir entre 99 % et 20 % en poids d'unités diéniques et entre 1 % et 80 % en poids d'unités vinylaromatiques. Les élastomères fonctionnalisés peuvent avoir toute microstructure qui est fonction des conditions de polymérisation utilisées. De manière particulièrement préférentielle, ledit élastomère diénique fonctionnalisé est choisi dans le groupe des élastomères diéniques fortement insaturés constitué par les polybutadiènes (BR), les polyisoprènes de synthèse (IR), les copolymères de butadiène-styrène (SBR), les copolymères de butadiène-isoprène (BIR), les copolymères d'isoprène-styrène (SIR) et les copolymères de butadiène-styrène-isoprène (SBIR).

On notera que les systèmes catalytiques utilisés dans le procédé selon l'invention permettent notamment d'obtenir des homopolymères fonctionnalisés du butadiène présentant à la fois une viscosité Mooney ML(1+4) à 100° C, mesurée selon la norme ASTM D 1646, qui est égale ou supérieure à 40, un taux d'enchaînements cis-1,4 (mesuré par la technique « NIR » de dosage par proche infrarouge, voir annexe 1 jointe) qui est supérieur à 90 %, et un indice de polydispersité inférieur à 2,1 (mesuré par la technique de chromatographie d'exclusion par la taille SEC, voir annexe 2 jointe).

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

Dans les exemples qui suivent, toutes les manipulations ont été réalisées sous atmosphère d'azote en suivant les règles usuelles de la manipulation sous atmosphère inerte. Pour déterminer la microstructure des polymères préparés, on a utilisé la technique de dosage appelée « proche infrarouge » (NIR - voir Annexe 1). Il s'agit d'une méthode indirecte faisant appel à des élastomères « témoin » dont la microstructure a été mesurée par la technique de RMN[13]C. On utilise la relation quantitative (loi de Beer-Lambert) existant entre la répartition des monomères dans un élastomère et la forme du spectre NIR de celui-ci.

La détermination des masses molaires et de l'indice de polydispersité des polymères est réalisée par la technique de chromatographie stérique (voir Annexe 2).

La viscosité inhérente $\eta_{inh}$ à 0,1 g/dl dans le toluène est mesurée à 25° C selon la méthode décrite en annexe 3, et la viscosité Mooney ML (1+4) à 100° C mesurée selon la norme ASTM D 1646. Les dosages de la DEAB greffée en bout de chaîne a été réalisé par RMN à partir des signaux correspondants aux protons $-CH_2-N-$. Les dosages du GLYMO greffé en bout de chaîne a été réalisé pr RMN à partir des signaux correspondants aux protons $-CH_2-Si-$.

**A- Exemples de synthèse de polybutadiènes fonctionnalisés en discontinu au moyen de systèmes catalytiques, sans mise en présence préalable d'un composé alkylaluminium avec le butadiène à polymériser**

On réalise en premier lieu 2 essais témoins de préparation de polybutadiènes fonctionnalisés à une température à 60°C.

*Contre-exemple 1 - Préparation à 60°C d'un polybutadiène fonctionnalisé DEAB*

Cet exemple décrit un essai de polymérisation du butadiène dans le méthylcyclohexane, au moyen d'un système catalytique préformé de formule :

oligobutadiényle lithié / chlorure de diéthylaluminium / tris(di-2-éthylhexylphosphate) de néodyme, aux rapports molaires 6/9/1.

1) Préparation du catalyseur

a) Préparation du dérivé allylique du lithium :

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.
Afin de déterminer le titre exact de cette solution, on a réalisé un dosage de Gilman.

b) Préparation du système catalytique :

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 1,5 mmoles de prépolymère lithié, et
- 2,25 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane. On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse. L'agent d'alkylation et le donneur d'halogène selon l'invention sont ainsi respectivement formés d'un oligobutadiényle aluminium et du chlorure de diéthylaluminium.

2) Polymérisation du butadiène :

Dans une série de bouteilles de 250 ml préalablement lavées et séchées, on a introduit successivement à température ambiante :

- 90 ml de méthylcyclohexane fraîchement barboté à l'azote,
- 10 g de butadiène, et
- une quantité de ce système catalytique correspondant à 5 μmoles de néodyme.

On a ensuite agité la bouteille à 60° C pendant les durées renseignées dans le tableau 1. Puis on a stoppé la polymérisation par l'injection de méthanol et l'on a ajouté au polybutadiène un agent de protection le 2,2'-métyhylène bis-4-méthyl-6-tertio-butylyphénol commercialisé par la société WESTCO sous la dénomination « AO2246 » (selon un volume d'1 ml d'une solution de toluène à 100 g/l) pour la solution polymérique obtenue. Le taux de conversion a été déterminé par extrait sec. Le tableau 1 ci-après montre l'évolution du polymère en fonction de la conversion par mesure de la viscosité inhérente et de la Mn.
En parallèle, le contenu d'une bouteille correspondant à un temps de polymérisation de 40 min. a été fonctionnalisé par ajout de 1 partie pour cent d'élastomère (« pce » en abrégé) de DEAB avant l'étape de stoppage au méthanol décrite ci-dessus, puis on a agité le milieu réactionnel ainsi obtenu pendant 30 min. à 60° C. On a ensuite procédé au stoppage par le méthanol, puis à la stabilisation de l'élastomère par ajout d'anti-oxydant.

Tableau 1 :

| Temps (min.) | Conversion (%) | Viscosité inhérente (dl/g) | Mn (g/mol) lp |
|---|---|---|---|
| 5 | 32 | 1,02 | 55 000 1,2 |

(suite)

| Temps (min.) | Conversion (%) | Viscosité inhérente (dl/g) | Mn (g/mol) Ip |
|---|---|---|---|
| 10 | 55 | 1,88 | 89000 1,3 |
| 15 | 74 | 2,24 | 119 000 1,5 |
| 20 | 89 | 2,56 | 139000 1,5 |
| 40 | 100 | 2,84 | 170000 1,7 |
| 40 (fonctionnalisation) | 100 | 2,82 | 172 000 1,8 |

Le taux de fonction calculé est de 1,8 méq/kg, ce qui correspond à taux de fonctionnalisation moyen de 31,1 % des chaînes de polymères.

On peut imputer ce faible taux de fonctionnalisation au couplage du dérivé allylique de l'aluminium dans les chaînes du polymère, au cours de la conversion.

***Contre-exemple 2 - Préparation à 60°C d'un polybutadiène fonctionnalisé GLYMO***

Le mode opératoire du contre-exemple 1 est reproduit à l'identique, à l'exception près que 3 pce de GLYMO sont utilisés plutôt que 1 pce de DEAB.

Le polymère fonctionnel obtenu présente les caractéristiques suivantes : Mn = 182 000 g/mol ; IP = 1,8 ; le taux de fonction GLYMO calculé est de 2,5 méq/kg de polymère, ce qui correspond à un taux de fonctionnalisation moyen de 45,5% des chaînes de polymères.

***Exemple 1 - Préparation à 20°C d'un polybutadiène fonctionnalisé DEAB***

Cet exemple décrit un essai de polymérisation du butadiène dans le méthylcyclohexane, au moyen d'un système catalytique préformé selon l'invention de formule :

oligobutadiényle lithié / chlorure de diéthylaluminium / tris(di-2-éthylhexylphosphate) de néodyme, aux rapports molaires 6/9/1.

1) Préparation du catalyseur

a) Préparation du dérivé allylique du lithium :

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.

Afin de déterminer le titre exact de cette solution, on a réalisé un dosage de Gilman.

b) Préparation du système catalytique :

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 1,5 mmoles de prépolymère lithié, et
- 2,25 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane. On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse.

L'agent d'alkylation et le donneur d'halogène selon l'invention sont ainsi respectivement formés d'un oligobutadiényle aluminium et du chlorure de diéthylaluminium.

2) Polymérisation du butadiène :

Dans une série de bouteilles de 250 ml préalablement lavées et séchées, on a introduit successivement à température ambiante :

- 90 ml de méthylcyclohexane fraîchement barboté à l'azote,
- 10 g de butadiène, et
- une quantité de ce système catalytique correspondant à 7 $\mu$moles de néodyme.

On a ensuite agité la bouteille à 20° C pendant les durées renseignées dans le tableau 2. Puis on a stoppé la polymérisation par l'injection de méthanol et l'on a ajouté au polybutadiène un agent de protection de dénomination « AO2246 » (selon un volume d'1 ml d'une solution de toluène à 100 g/l) pour la solution polymérique obtenue. Le taux de conversion a été déterminé par extrait sec. Le tableau 2 ci-après montre l'évolution du polymère en fonction de la conversion par mesure de la viscosité inhérente et de la Mn.

En parallèle, le contenu d'une bouteille correspondant à un temps de polymérisation de 40 min. a été fonctionnalisé par ajout de 1 pce de DEAB avant l'étape de stoppage au méthanol décrite ci-dessus, puis on a agité le milieu réactionnel ainsi obtenu pendant 30 min. à 20° C. On a ensuite procédé au stoppage par le méthanol, puis à la stabilisation de l'élastomère par ajout d'anti-oxydant.

Tableau 2 :

| Temps (min.) | Conversion (%) | Viscosité inhérente (dl/g) | Mn (g/mol) Ip |
|---|---|---|---|
| 5 | 25 | 0,85 | 55 000 1,2 |
| 10 | 48 | 1,74 | 74 000 1,3 |
| 15 | 70 | 1,98 | 96 000 1,4 |
| 20 | 85 | 2,15 | 113 000 1,4 |
| 40 | 95 | 2,35 | 125 000 1,4 |
| 40 (fonctionnalisation) | 98 | 2,41 | 128 000 1,5 |

Le taux de fonction calculé est de 3,8 méq/kg, ce qui correspond à taux de fonctionnalisation moyen de 48,6% des chaînes de polymères.

**Exemple 2 - Préparation à 20°C d'un polybutadiène fonctionnalisé GLYMO**

Le mode opératoire de l'exemple 1 est reproduit à l'identique, à l'exception près que 2 pce de GLYMO sont utilisés plutôt que 1 pce de DEAB.

Le polymère fonctionnel obtenu présente les caractéristiques suivantes : Mn = 134 000 g/mol ; IP = 1,5 ; le taux de fonction GLYMO calculé est de 4,7 méq/kg de polymère, ce qui correspond à un taux de fonctionnalisation moyen de 62,3% des chaînes de polymères.

### Exemple 3 -Préparation à 10°C d'un polybutadiène fonctionnalisé DEAB

Cet exemple décrit un essai de polymérisation du butadiène dans le méthylcyclohexane, au moyen d'un système catalytique préformé selon l'invention de formule :

oligobutadiényle lithié / chlorure de diéthylaluminium / tris(di-2-éthylhexylphosphate) de néodyme, aux rapports molaires 3/6/1.

1) Préparation du catalyseur

a) <u>Préparation du dérivé allylique du lithium :</u>

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.

Afin de déterminer le titre exact de cette solution, on a réalisé un dosage de Gilman.

b) <u>Préparation du système catalytique :</u>

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 0,75 mmoles de prépolymère lithié,
- 1,5 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane.

On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse. L'agent d'alkylation et le donneur d'halogène selon l'invention sont ainsi respectivement formés d'un oligobutadiényle aluminium et du chlorure de diéthylaluminium.

2) <u>Polymérisation du butadiène :</u>

Dans une série de bouteilles de 250 ml préalablement lavées et séchées, on a introduit successivement à température ambiante :

- 90 ml de méthylcyclohexane fraîchement barboté à l'azote,
- 10 g de butadiène, et
- une quantité de ce système catalytique correspondant à 10 $\mu$moles de néodyme.

On a ensuite agité la bouteille à 10° C pendant les durées renseignées dans le tableau 3. Puis on a stoppé la polymérisation par l'injection de méthanol et l'on a ajouté au polybutadiène un agent de protection de dénomination « AO2246 » (selon un volume d'1 ml d'une solution de toluène à 100 g/l) pour la solution polymérique obtenue. Le taux de conversion a été déterminé par extrait sec. Le tableau 3 ci-après montre l'évolution du polymère en fonction de la conversion par mesure de la viscosité inhérente et de la Mn.

En parallèle, le contenu d'une bouteille correspondant à un temps de polymérisation de 40 min. a été fonctionnalisé par ajout de 1 pce de DEAB avant l'étape de stoppage au méthanol décrite ci-dessus, puis on a agité le milieu réactionnel ainsi obtenu pendant 60 min. à 10° C. On a ensuite procédé au stoppage par le méthanol, puis à la stabilisation de l'élastomère par ajout d'anti-oxydant.

Tableau 3 :

| Temps (min.) | Conversion (%) | Viscosité inhérente (dl/g) | Mn (g/mol) lp |
|---|---|---|---|
| 5 | 21 | 0,85 | 47 000 1,2 |
| 10 | 34 | 1,35 | 65 000 1,2 |
| 15 | 64 | 2,05 | 104 000 1,3 |
| 20 | 79 | 2,40 | 136000 1,3 |
| 40 | 100 | 2,72 | 166 000 1,4 |
| 40 (fonctionnalisation) | 100 | 2,70 | 171 000 1,4 |

Le taux de fonction calculé est de 4,4 méq/kg, ce qui correspond à taux de fonctionnalisation moyen de 75% des chaînes de polymères.

### Exemple 4 - Préparation à 10°C d'un polybutadiène fonctionnalisé GLYMO

Le mode opératoire de l'exemple 3 est reproduit à l'identique, à l'exception près que 2 pce de GLYMO sont utilisés plutôt que 1 pce de DEAB.
Le polymère fonctionnel obtenu présente les caractéristiques suivantes : Mn = 144 000 g/mol ; IP = 1,5 ; le taux de fonction GLYMO calculé est de 4,5 méq/kg de polymère, ce qui correspond à un taux de fonctionnalisation moyen de 64,8% des chaînes de polymères.

### Exemple 5 - Préparation à 40°C d'un polybutadiène fonctionnalisé DEAB

Cet exemple décrit un essai de polymérisation du butadiène dans le méthylcyclohexane, au moyen d'un système catalytique préformé selon l'invention de formule :

oligobutadiényle lithié / chlorure de diéthylaluminium / tris(di-2-éthylhexylphosphate) de néodyme, aux rapports molaires 3/6/1.

1) Préparation du catalyseur

a) Préparation du dérivé allylique du lithium :

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.
Afin de déterminer le titre exact de cette solution, on a réalisé un dosage de Gilman.

b) Préparation du système catalytique :

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 0,75 mmoles de prépolymère lithié,
- 1,5 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane.
On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse. L'agent d'alkylation et le donneur d'halogène selon l'invention sont ainsi respectivement formés d'un oligobutadiényle aluminium et du chlorure de diéthylaluminium.

2) Polymérisation du butadiène :

Dans une série de bouteilles de 250 ml préalablement lavées et séchées, on a introduit successivement à température ambiante :

- 90 ml de méthylcyclohexane fraîchement barboté à l'azote,
- 10 g de butadiène, et
- une quantité de ce système catalytique correspondant à 7 μmoles de néodyme.

On a ensuite agité la bouteille à 40° C pendant les durées renseignées dans le tableau 4. Puis on a stoppé la polymérisation par l'injection de méthanol et l'on a ajouté au polybutadiène un agent de protection de dénomination « AO2246 » (selon un volume d'1 ml d'une solution de toluène à 100 g/l) pour la solution polymérique obtenue. Le taux de conversion a été déterminé par extrait sec. Le tableau 4 ci-après montre l'évolution du polymère en fonction de la conversion par mesure de la viscosité inhérente et de la Mn.
En parallèle, le contenu d'une bouteille correspondant à un temps de polymérisation de 40 min. a été fonctionnalisé par ajout de 1 pce de DEAB avant l'étape de stoppage au méthanol décrite ci-dessus, puis on a agité le milieu réactionnel ainsi obtenu pendant 60 min. à 40° C. On a ensuite procédé au stoppage par le méthanol, puis à la stabilisation de l'élastomère par ajout d'anti-oxydant.

Tableau 4 :

| Temps (min.) | Conversion (%) | Viscosité inhérente (dl/g) | Mn (g/mol) Ip |
|---|---|---|---|
| 5 | 23 | 0,77 | 51 000 1,2 |
| 10 | 54 | 1,68 | 72 000 1,2 |
| 15 | 75 | 2,10 | 107 000 1,3 |
| 20 | 88 | 2,41 | 133 000 1,3 |
| 40 | 100 | 2,46 | 139 000 1,4 |
| 40 (fonctionnalisation) | 100 | 2,48 | 142 000 1,4 |

Le taux de fonction calculé est de 4,9 méq/kg, ce qui correspond à taux de fonctionnalisation moyen de 69,6% des chaînes de polymères.

### Exemple 6 - Préparation à 40°C d'un polybutadiène fonctionnalisé GLYMO

Le mode opératoire de l'exemple 5 est reproduit à l'identique, à l'exception près que 2 pce de GLYMO sont utilisés plutôt que 1 pce de DEAB.
Le polymère fonctionnel obtenu présente les caractéristiques suivantes : Mn = 144 000 g/mol ; IP = 1,5 ; le taux de fonction GLYMO calculé est de 4,5 méq/kg de polymère, ce qui correspond à un taux de fonctionnalisation moyen de 64,8% des chaînes de polymères.

**B- Exemple de synthèse de polybutadiènes fonctionnalisés en discontinu au moyen de systèmes catalytiques, avec mise en présence préalable d'un composé alkylaluminium avec le butadiène à polymériser**

### Exemple 7-Préparation à 10°C d'un polybutadiène fonctionnalisé DEAB

Cet exemple décrit un essai de polymérisation du butadiène dans le méthylcyclohexane, au moyen d'un système catalytique préformé de formule :

oligobutadiényle lithié / chlorure de diéthylaluminium / tris(di-2-éthylhexylphosphate) de néodyme, aux rapports molaires 3/6/1.

1) Préparation du catalyseur

a) <u>Préparation du dérivé allylique du lithium :</u>

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.
Afin de déterminer le titre exact de cette solution, on a réalisé un dosage de Gilman.

b) <u>Préparation du système catalytique :</u>

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 0,75 mmoles de prépolymère lithié,
- 1,5 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane. On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse. L'agent d'alkylation et le donneur d'halogène selon l'invention sont ainsi respectivement formés d'un oligobutadiényle aluminium et du chlorure de diéthylaluminium.

2) <u>Polymérisation du butadiène :</u>

Dans une série de bouteilles de 250 ml préalablement lavées et séchées, on a introduit successivement à température ambiante :

- 90 ml de méthylcyclohexane fraîchement barboté à l'azote,
- 20 μmoles d'hydrure de diisobutylaluminium,
- 10 g de butadiène, et
- une quantité de ce système catalytique correspondant à 10 μmoles de néodyme.

On a ensuite agité la bouteille à 0° C pendant les durées renseignées dans le tableau 4. Puis on a stoppé la polymérisation par l'injection de méthanol et l'on a ajouté au polybutadiène un agent de protection de dénomination « AO2246 » (selon un volume d'1 ml d'une solution de toluène à 100 g/l) pour la solution polymérique obtenue. Le taux de conversion a été déterminé par extrait sec. Le tableau 5 ci-après montre l'évolution du polymère en fonction de la conversion par mesure de la viscosité inhérente et de la Mn.

En parallèle, le contenu d'une bouteille correspondant à un temps de polymérisation de 40 min. a été fonctionnalisé par ajout de 1 pce de DEAB avant l'étape de stoppage au méthanol décrite ci-dessus, puis on a agité le milieu réactionnel ainsi obtenu pendant 60 min. à 10° C. On a ensuite procédé au stoppage par le méthanol, puis à la stabilisation de l'élastomère par ajout d'anti-oxydant.

Tableau 5 :

| Temps (min.) | Conversion (%) | Viscosité inhérente (dl/g) | Mn (g/mol) Ip |
|---|---|---|---|
| 5 | 21 | 0,79 | 38 000 1,2 |
| 10 | 34 | 1,21 | 58 000 1,2 |
| 15 | 64 | 1,96 | 87000 1,3 |
| 20 | 79 | 2,03 | 98 000 1,3 |
| 40 | 100 | 2,22 | 118 000 1,4 |
| 40 (fonctionnalisation) | 100 | 2,28 | 123 000 1,4 |

Le taux de fonction calculé est de 5,2 méq/kg, ce qui correspond à taux de fonctionnalisation moyen de 64% des chaînes de polymères.

### Exemple 8 - Préparation à 20°C d'un polybutadiène fonctionnalisé GLYMO

Le mode opératoire de l'exemple 7 est reproduit à l'identique, à l'exception près que :

- 7 $\mu$moles d'hydrure de diisobutyle aluminium sont introduites dans le milieu de polymérisation avant ajout du système catalytique,
- une quantité de catalyseur correspondant à 7 $\mu$moles de néodyme,
- la température de polymérisation et de fonctionnalisation est de 20°C,
- 2 pce de GLYMO sont utilisés plutôt que 1 pce de DEAB.

Le polymère fonctionnel obtenu présente les caractéristiques suivantes : Mn = 120 000 g/mol ; IP = 1,5 ; le taux de fonction GLYMO calculé est de 5,2 méq/kg de polymère, ce qui correspond à un taux de fonctionnalisation moyen de 62,4% des chaînes de polymères.

**ANNEXE 1 : Détermination de la microstructure des polybutadiènes obtenus.**

On a utilisé la technique de dosage appelée « proche infrarouge » (NIR). Il s'agit d'une méthode indirecte faisant appel à des élastomères « témoin » dont la microstructure a été mesurée par la technique de RMN[13]C. On utilise la relation quantitative (loi de Beer-Lambert) existant entre la répartition des monomères dans un élastomère et la forme du spectre NIR de celui-ci. Cette technique est mise en oeuvre en deux étapes :

1) Etalonnage :

- On procède à l'acquisition des spectres respectifs des élastomères « témoin ».

- On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

(1) P. GELADI et B. R. KOWALSKI « Partial Least Squares regression : a tutorial »,Analytica Chimica Acta, vol. 185, 1-17 (1986).
(2) M. TENENHAUS« La régression PLS - Théorie et pratique »Paris, Editions Technip (1998).

2) <u>Mesure :</u>

- On procède à un enregistrement du spectre de l'échantillon.
- On réalise le calcul de la microstructure.

**ANNEXE 2 :**

**Détermination de la distribution des masses moléculaires des polybutadiènes obtenus par la technique de chromatographie d'exclusion par la taille (SEC).**

a) <u>Principe de la mesure:</u>

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) <u>Préparation du polymère:</u>

Il n'y a pas de traitement particulier de l'échantillon de polymère avant analyse. Celui-ci est simplement solubilisé dans du tétrahydrofurane à une concentration d'environ 1 g/l.

c) <u>Analyse SEC:</u>

<u>Cas c1)</u> L'appareillage utilisé est un chromatographe « WATERS alliance ». Le solvant d'élution est le tétrahydrofurane, le débit de 1 ml/min., la température du système de 35° C et la durée d'analyse de 90 min. On utilise un jeu de deux colonnes de dénomination commerciale « STYRAGEL HT6E ».

Le volume injecté de la solution de l'échantillon de polymère est 100 $\mu$l. Le système de détection est un réfractomètre différentiel « WATERS 2140 », un viscosimètre Waters et un détecteur UV (320 nm). Le logiciel d'exploitation des données chromatographiques est le système « WATERS MILLENIUM ».

<u>Cas c2)</u> L'appareillage utilisé est un chromatographe « WATERS, modèle 150C ». Le solvant d'élution est le tétrahydrofurane, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 $\mu$l. Le détecteur est un réfractomètre différentiel « WATERS modèle RI32X » et le logiciel d'exploitation des données chromatographiques est le système « WATERS MILLENIUM » (version 3.00).

**ANNEXE 3 :**

**Détermination de la viscosité inhérente à 25° C d'une solution de polymère à 0,1 g/dl dans le toluène, à partir d'une solution de polymère sec**

<u>PRINCIPE:</u>

La viscosité inhérente est déterminée par la mesure du temps d'écoulement t de la solution de polymère et du temps d'écoulement $t_o$ du toluène, dans un tube capillaire.

La méthode se décompose en 3 grandes étapes:

→ *étampe n°1* : préparation de la solution de mesure à 0,1 g/dl dans le toluène ;
→ *étape n°2* : mesure des temps d'écoulement t de la solution de polymère et $t_o$ du toluène à 25° C dans un tube « Ubbelohde » ;
→ *étape n°3 :* calcul de la viscosité inhérente.

*ETAPE N°1 - Préparation de la solution de mesure à partir du polymère sec :*

Dans une bouteille de 250 ml lavée et étuvée à 140° C au minimum 10 heures, on introduit 0,1 g de polymère sec (utilisation d'une balance de précision d'échelon e = 0,1 mg) et 100 ml de toluène de pureté supérieure à 99,5 %.
On place la bouteille sur un dispositif d'agitation à secousses pendant 90 min. (voire plus si le polymère n'est pas solubilisé).

*ETAPE N°2 - Mesure des temps d'écoulement $t_o$ du toluène et t de la solution de polymère à 25° C :*

1. Matériel:

- 1 cuve avec un bain thermostaté à 25° C $\pm$ 0,1° C pourvu d'un système de refroidissement à l'eau courante. La cuve est remplie par ¼ d'eau courante et ¾ d'eau déminéralisée.
- 1 thermomètre à alcool de type « PROLABO », placé dans le bain thermostaté avec une incertitude de $\pm$ 0,1° C
- 1 tube viscosimétrique « Ubbelohde » destiné à être placé en position verticale dans le bain thermostaté.

*Caractéristiques des tubes utilisés:*

- diamètre du capillaire: 0,46 mm ;
- capacité: 18 à 22 ml.

2. Mesure du temps d'écoulement $t_o$ du toluène :

- rincer le tube par lavages au toluène ;
- introduire la quantité de toluène (pureté supérieure à 99,5 %) nécessaire à la mesure ;
- vérifier que le bain thermostaté est à 25° C ;
- déterminer le temps d'écoulement $t_0$.

3. Mesure du temps d'écoulement de la solution de polymère t

- rincer le tube par lavages à la solution de polymère ;
- introduire la quantité de solution de polymère nécessaire à la mesure ;
- vérifier que le bain thermostaté est à 25° C.
- déterminer le temps d'écoulement t.

*ETAPE N°3 - Calcul de la viscosité inhérente :*

La viscosité inhérente est obtenue par la relation suivante :

$$\eta_{inh} = \frac{1}{C} \ln\left[\frac{(t)}{(t_O)}\right]$$

avec

C :    concentration de la solution toluénique de polymère en g/dl ;
t :    temps d'écoulement de la solution toluénique de polymère en secondes ;
$t_0$ :   temps d'écoulement du toluène en secondes ;
$\eta_{inh}$:   viscosité inhérente exprimée en dl/g.

**Revendications**

1. Procédé de préparation d'un élastomère diénique fonctionnalisé présentant un taux d'enchaînements cis-1,4 supérieur à 90 % et un indice de polydispersité inférieur à 2,1, tel qu'un homopolymère ou un copolymère du butadiène, comprenant une réaction en continu ou en discontinu d'un système catalytique avec au moins un monomère diène conjugué à polymériser puis l'ajout d'un agent de fonctionnalisation au polymère ainsi obtenu pour l'obtention dudit élastomère fonctionnalisé, ledit système catalytique étant à base d'au moins :

   - optionnellement un diène conjugué de préformation,
   - un sel d'un ou plusieurs métaux de terre rare, tel qu'un sel d'un acide carboxylique ou d'un acide phosphorique organique,
   - un solvant hydrocarboné inerte,
   - un agent d'alkylation comprenant un dérivé allylique de l'aluminium de formule $R''_nAlR'_{3-n}$, où R' est un groupe alkyle saturé ou non ou bien un hydrure, où R'' est un groupe allylique et où n est un entier inclusivement compris entre 1 et 3, et
   - un donneur d'halogène qui appartient à la famille des halogénures d'alkylaluminium, à l'exclusion des sesquihalogénures d'alkylaluminium lors de ladite réaction, **caractérisé en ce que** la température de polymérisation s'étend inclusivement de 10°C à 40° C.

2. Procédé selon la revendication 1, **caractérisé en ce que** ladite température de polymérisation s'étend de 10° C à 20° C,.

3. Procédé selon une des revendications précédentes, **caractérisé en ce que** ledit radical allylique contenu dans ledit dérivé allylique de l'aluminium est choisi dans le groupe constitué par les dérivés butadiényle, isoprényle, oligobutadiényle et oligoisoprényle.

4. Procédé selon une des revendications précédentes, **caractérisé en ce que** ledit dérivé allylique de l'aluminium comprend le produit de la réaction d'un dérivé allylique du lithium de formule R''Li et d'un agent halogénant de formule $X_nAlR'_{3-n}$, où X est un halogène et où R', R'' et n sont tels que définis ci-dessus.

5. Procédé selon la revendication 3, **caractérisé en ce que** ledit donneur d'halogène correspond audit agent halogénant de formule $X_nAlR'_{3-n}$ utilisé en excès, lequel a réagi en partie seulement avec ledit dérivé allylique du lithium pour l'obtention dudit dérivé allylique de l'aluminium.

6. Procédé selon une des revendications 3 à 5, **caractérisé en ce que** ledit agent halogénant est à base de brome, ledit système catalytique étant alors préformé antérieurement à ladite réaction de polymérisation.

7. Procédé selon une des revendications 4 à 6, **caractérisé en ce que** l'on prépare ledit système catalytique en réalisant un pré-mélange comprenant ledit solvant hydrocarboné inerte, ledit dérivé allylique du lithium et ledit agent halogénant, puis un ajout dudit sel de terre rare à ce pré-mélange.

8. Procédé selon une des revendications 4 à 7, **caractérisé en ce que** ledit agent halogénant est à base de chlore, ledit système catalytique étant alors formé *in situ* dans le milieu de polymérisation comprenant le(s)dit monomère(s).

9. Procédé selon une des revendications précédentes, **caractérisé en ce que** le rapport molaire (agent d'alkylation / sel de terre(s) rare(s)) dans ledit système catalytique présente une valeur allant de 1 à 20.

10. Procédé selon la revendication 9, **caractérisé en ce que** le rapport molaire donneur d'halogène / sel de terre(s) rare(s) dans ledit système catalytique présente une valeur allant de 2 à 3,5.

**11.** Procédé selon l'une des revendications précédentes, **caractérisé en ce que** ledit procédé comprend une mise en présence en décalé par rapport aux constituants du système catalytique utilisé pour la réaction de polymérisation en continu ou en discontinu du ou des monomère(s) à polymériser, une quantité supplémentaire prédéterminée d'au moins un composé alkylaluminium de formule $AlR_3$ ou $HAlR_2$ ou $R"_nAlR'_{3-n}$, où R est un groupe alkyle et H un atome d'hydrogène, R' et R" comme définis ci-dessus, choisie en fonction des caractéristiques du milieu de polymérisation et/ou des conditions de polymérisation et/ou dudit élastomère à obtenir.

**12.** Procédé selon une des revendications précédentes, **caractérisé en ce que** la quantité du composé alkylaluminium de formule $AlR_3$ ou $HAlR_2$ ou $R"_nAlR'_{3-n}$ préalablement mis en présence avec le(s)dit(s) monomère(s) à polymériser varie de 10 à 5000 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

**13.** Procédé selon une des revendications précédentes, **caractérisé en ce que** l'on met en oeuvre ladite réaction de polymérisation en continu, ledit composé alkylaluminium étant mis en présence avec le(s)dit(s) monomère(s) à polymériser en une entrée de ligne située en amont d'au moins un réacteur de polymérisation puis le sel de terre(s) rare(s) en amont d'au moins un réacteur de polymérisation dans lequel ou lesquels est (sont) introduit(s) le(s) monomère(s) à polymériser.

**14.** Procédé selon une des revendications précédentes 2 à 13, **caractérisé en ce que** le dérivé allylique de l'alkylaluminium, synthétisé à partir du dérivé allylique du lithium et de l'agent halogénant, est introduit en entrée de ligne à l'aide d'un mélangeur dynamique de type parfaitement agité et le sel de terre(s) rare(s) est introduit en entrée de ligne à l'aide d'un mélangeur disposant d'une agitation de type statique.

**15.** Procédé selon une des revendications précédentes 2 à 14, **caractérisé en ce que** ledit monomère diène conjugué est le butadiène, pour l'obtention d'un homopolymère du butadiène fonctionnalisé présentant à la fois une viscosité Mooney ML(1+4) à 100° C, mesurée selon la norme ASTM D 1646, qui est égale ou supérieure à 40, un indice de polydispersité égal ou inférieur à 2,1, et un taux d'enchaînements cis-1,4 supérieur à 90 %.

**Patentansprüche**

**1.** Verfahren zur Herstellung eines funktionalisierten Dienelastomers mit einem Gehalt an cis-1,4-Verknüpfungen von mehr als 90% und einem Polydispersitätsindex von weniger als 2,1, wie eines Butadien-Homopolymers oder -Copolymers, bei dem man ein katalytisches System kontinuierlich oder diskontinuierlich mit mindestens einem zu polymerisierenden konjugierten Dienmonomer umsetzt und dann zu dem so erhaltenen Polymer ein Funktionalisierungsmittel gibt, um das funktionalisierte Elastomer zu erhalten, wobei das katalytische System mindestens basiert auf:

- gegebenenfalls einem konjugierten Dien der Vorbildung,
- einem Salz eines oder mehrerer Seltenerdmetalle, wie einem Salz einer Carbonsäure oder organischen Phosphorsäure,
- einem inerten Kohlenwasserstofflösungsmittel,
- einem Alkylierungsmittel, das ein Aluminiumallylderivat der Formel $R"_nAlR'_{3-n}$ umfasst, wobei R' für eine gesättigte oder ungesättigte Alkylgruppe oder auch ein Hydrid steht und R'' für eine Allylgruppe steht und n für eine ganze Zahl zwischen 1 und 3 inklusive steht, und
- einem Halogendonor aus der Familie der Alkylaluminiumhalogenide mit Ausnahme der Alkylaluminiumsesquihalogenide, bei der Umsetzung, **dadurch gekennzeichnet, dass** die Polymerisationstemperatur sich von einschließlich 10°C bis 40°C erstreckt.

**2.** Verfahren nach Anspruch 1, **dadurch gekennzeichnet, dass** sich die Polymerisationstemperatur von 10°C bis 20°C erstreckt.

**3.** Verfahren nach einem der vorhergehenden Ansprüche, **dadurch gekennzeichnet, dass** der Allylrest, der in dem Aluminiumallylderivate enthalten ist, aus der Gruppe bestehend aus Butadienyl-, Isoprenyl-, Oligobutadienyl- und Oligoisoprenylderivaten ausgewählt wird.

**4.** Verfahren nach einem der vorhergehenden Ansprüche, **dadurch gekennzeichnet, dass** es sich bei dem Aluminiumallylderivat um das Reaktionsprodukt eines Lithiumallylderivats der Formel R''Li und eines Halogenierungsmittels der Formel $X_nAlR'_{3-n}$ handelt, wobei X für ein Halogen steht und R', R'' und n wie oben definiert sind.

5. Verfahren nach Anspruch 3, **dadurch gekennzeichnet, dass** der Halogendonor dem im Überschuss verwendeten Halogenierungsmittel der Formel $X_nAlR'_{3-n}$ entspricht, welches nur zum Teil mit dem Lithiumallylderivat zu dem Aluminiumallylderivat reagiert hat.

6. Verfahren nach einem der Ansprüche 3 bis 5, **dadurch gekennzeichnet, dass** das Halogenierungsmittel auf Brom basiert, wobei das katalytische System dann vor der Polymerisationsreaktion vorgebildet wird.

7. Verfahren nach einem der Ansprüche 4 bis 6, **dadurch gekennzeichnet, dass** man das katalytische System herstellt, indem man eine Vormischung, die das inerte Kohlenwasserstofflösungsmittel, das Lithiumallylderivat und das Halogenierungsmittel umfasst, herstellt und dann das Seltenerdmetallsalz zu dieser Vormischung gibt.

8. Verfahren nach einem der Ansprüche 4 bis 7, **dadurch gekennzeichnet, dass** das Halogenierungsmittel auf Chlor basiert, wobei das katalytische System dann in situ in dem Polymerisationsmedium, das das zu polymerisierende Monomer bzw. die zu polymerisierenden Monomere umfasst, gebildet wird.

9. Verfahren nach einem der vorhergehenden Ansprüche, **dadurch gekennzeichnet, dass** das Molverhältnis von Alkylierungsmittel zu Seltenerdmetallsalz(en) in dem katalytischen System einen Wert im Bereich von 1 bis 20 aufweist.

10. Verfahren nach Anspruch 9, **dadurch gekennzeichnet, dass** das Molverhältnis von Halogendonor zu Seltenerdmetallsalz(en) in dem katalytischen System einen Wert im Bereich von 2 bis 3,5 aufweist.

11. Verfahren nach einem der vorhergehenden Ansprüche, **dadurch gekennzeichnet, dass** man gegenüber den Bestandteilen des für die kontinuierliche oder diskontinuierliche Polymerisationsreaktion des zu polymerisierenden Monomers beziehungsweise der zu polymerisierenden Monomere verwendeten katalytischen Systems zeitversetzt eine vorbestimmte zusätzliche Menge mindestens einer Alkylaluminiumverbindung der Formel $AlR_3$ oder $HAlR_2$ oder $R''_nAlR'_{3-n}$, worin R für eine Alkylgruppe steht und H für ein Wasserstoffatom steht und R' und R'' wie oben definiert sind, die in Abhängigkeit von den Eigenschaften des Polymerisationsmediums und/oder der Polymerisationsbedingungen und/oder des zu erhaltenden Elastomers ausgewählt wird, zusammenbringt.

12. Verfahren nach einem der vorhergehenden Ansprüche, **dadurch gekennzeichnet, dass** die Menge der vorher mit dem zu polymerisierenden Monomer beziehungsweise den zu polymerisierenden Monomeren zusammengebrachten Alkylaluminiumverbindung der Formel $AlR_3$ oder $HAlR_2$ oder $R''_nAlR'_{3-n}$ in Abhängigkeit von den für das Elastomer gewünschten Makrostruktureigenschaften und/oder der Menge der in dem Polymerisationsmedium vorliegenden Verunreinigungen, wie aus recyclierten Lösungsmitteln stammenden Verunreinigungen, von 10 bis 5000 Mikromol auf 100 g zu polymerisierendes konjugiertes Dienmonomer variiert.

13. Verfahren nach einem der vorhergehenden Ansprüche, **dadurch gekennzeichnet, dass** man die Polymerisationsreaktion kontinuierlich durchführt, wobei man die Alkylaluminiumverbindung in einem vor dem mindestens einen Polymerisationsreaktor gelegenen Leitungseinlass mit dem zu polymerisierenden Monomer bzw. den zu polymerisierenden Monomeren und dann vor dem Polymerisationsreaktor, in den das zu polymerisierende Monomer beziehungsweise die zu polymerisierenden Monomere eingetragen wird beziehungsweise werden, mit dem Seltenerdmetallsalz beziehungsweise den Seltenerdmetallsalzen zusammenbringt.

14. Verfahren nach einem der vorhergehenden Ansprüche 2 bis 13, **dadurch gekennzeichnet, dass** das auf dem Lithiumallylderivat und dem Halogenierungsmittel synthetisierte Alkylaluminiumallylderivat mit Hilfe eines dynamischen Mischers vom perfekt gerührten Typ in den Leitungseinlass einträgt und das Seltenerdmetallsalz beziehungsweise die Seltenerdmetallsalze mit Hilfe eines Mischers mit Berührung vom statischen Typ in den Leitungseinlass einträgt.

15. Verfahren nach einem der vorhergehenden Ansprüche 2 bis 14, **dadurch gekennzeichnet, dass** es sich bei dem konjugierten Dienmonomer um Butadien handelt, zum Erhalt eines funktionalisierten Butadien-Homopolymers, das gleichzeitig eine gemäß der ASTM-Norm D 1646 gemessenen Mooney-Viskosität (1+4) bei 100°C größer gleich 40, einen Polydispersitätsindex kleiner gleich 2,1 und einen Gehalt an cis-1,4-Verknüpfungen von mehr als 90% aufweist.

**Claims**

1. Process for the preparation of a functionalized diene elastomer exhibiting a content of cis-1,4-enchainments of greater than 90% and a polydispersity index of less than 2.1, such as a butadiene homopolymer or copolymer, comprising a continuous or non-continuous reaction of a catalytic system with at least one conjugated diene monomer to be polymerized and then the addition of a functionalization agent to the polymer thus obtained in order to obtain the said functionalized elastomer, the said catalytic system being based on at least:

   - optionally, a preformation conjugated diene,
   - a salt of one or more rare earth metals, such as a salt of an organic carboxylic acid or of an organic phosphoric acid,
   - an inert hydrocarbon solvent,
   - an alkylating agent comprising an aluminium allyl derivative of formula $R''_nAlR'_{3-n}$, where $R'$ is a saturated or unsaturated alkyl group or else a halide, where $R''$ is an allyl group and where $n$ is an integer between 1 and 3 inclusive, and
   - a halogen donor which belongs to the family of the alkylaluminium halides, with the exception of the alkylaluminium sesquihalides, during the said reaction, **characterized in that** the polymerization temperature extends from 10°C to 40°C inclusive.

2. Process according to Claim 1, **characterized in that** the said polymerization temperature extends from 10°C to 20°C.

3. Process according to either of the preceding claims, **characterized in that** the said allyl radical present in the said aluminium allyl derivative is selected from the group consisting of butadienyle, isoprenyle, oligobutadienyl and oligoisoprenyl derivatives.

4. Process according to one of the preceding claims, **characterized in that** the said aluminium allyl derivative is the reaction product of an allyllithium derivative of formula R''Li and of a halogenating agent of formula $X_nAlR'_{3-n}$, where X is a halogen and where $R'$, R'' and $n$ are as defined above.

5. Process according to Claim 3, **characterized in that** the said halogen donor corresponds to the said halogenating agent of formula $X_nAlR'_{3-n}$ used in excess, which has in part reacted only with the said allyllithium derivative in order to obtain the said aluminium allyl derivative.

6. Process according to one of Claims 3 to 5, **characterized in that** the said halogenating agent is based on bromine, the said catalytic system then being preformed prior to the said polymerization reaction.

7. Process according to one of Claims 4 to 6, **characterized in that** the said catalytic system is prepared by producing a premix comprising the said inert hydrocarbon solvent, the said allyllithium derivative and the said halogenating agent, followed by an addition of the said rare earth metal salt to this premix.

8. Process according to one of Claims 4 to 7, **characterized in that** the said halogenating agent is based on chlorine, the said catalytic system then being formed *in situ* in the polymerization medium comprising the said monomer(s).

9. Process according to one of the preceding claims, **characterized in that** the alkylating agent/rare earth metal salt molar ratio in the said catalytic system exhibits a value ranging from 1 to 20.

10. Process according to Claim 9, **characterized in that** the halogen donor/rare earth metal salt molar ratio in the said catalytic system exhibits a value ranging from 2 to 3.5.

11. Process according to one of the preceding claims, **characterized in that** the said process comprises bringing together, offset in time with respect to the constituents of the catalytic system used for the reaction for the polymerization, continuously or non-continuously, of the monomer or monomers to be polymerized, an additional predetermined amount of at least one alkylaluminium compound of formula $AlR_3$ or $HAlR_2$ or $R''_nAlR'_{3-n}$, where R is an alkyl group and H is a hydrogen atom, $R'$ and R'' as defined above, which amount is chosen as a function of the characteristics of the polymerization medium and/or of the polymerization conditions and/or of the said elastomer to be obtained.

12. Process according to one of the preceding claims, **characterized in that** the amount of the alkylaluminium compound

of formula $AlR_3$ or $HAlR_2$ or $R''_nAlR'_{3-n}$ brought together beforehand with the said monomer(s) to be polymerized varies from 10 to 5000 micromol per 100 g of conjugated diene monomer to be polymerized, in particular as a function of the macrostructure characteristics targeted for the said elastomer and/or of the amount of impurities present in the polymerization medium, such as impurities originating from recycled solvents.

13. Process according to one of the preceding claims, **characterized in that** the said polymerization reaction is carried out continuously, the said alkylaluminium compound being brought together with the said monomer(s) to be polymerized in a line inlet located upstream of at least one polymerization reactor and then the rare earth metal salt upstream of at least one polymerization reactor into which the monomer(s) to be polymerized is (are) introduced.

14. Process according to one of the preceding Claims 2 to 13, **characterized in that** the alkylaluminium allyl derivative, synthesized from the allyllithium derivative and the halogenating agent, is introduced in a line inlet using a dynamic mixer of perfectly stirred type and the rare earth metal salt is introduced in a line inlet using a mixer having available stirring of static type.

15. Process according to one of the preceding Claims 2 to 14, **characterized in that** the said conjugated diene monomer is butadiene, in order to obtain a functionalized butadiene homopolymer simultaneously exhibiting a Mooney viscosity ML(1+4) at 100°C, measured according to Standard ASTM D 1646, which is equal to or greater than 40, a polydispersity index equal to or less than 2.1 and a content of cis-1,4-enchainments of greater than 90%.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0238636 A
- WO 03097708 A
- EP 919573 A1
- EP 1845118 A1
- FR 2740778 A
- EP 1050545 B
- WO 0064910 A
- WO 2007045417 A

**Littérature non-brevet citée dans la description**

- **P. GELADI ; B. R. KOWALSKI.** Partial Least Squares regression : a tutorial. *Analytica Chimica Acta,* 1986, vol. 185, 1-17
- **M. TENENHAUS.** La régression PLS - Théorie et pratique. Editions Technip, 1998